# EUROPEAN PATENT APPLICATION

(11) **EP 2 665 178 A2**
(43) Date of publication of application: **20.11.2013**
(21) Application number: 12006470.4
(22) Date of filing: 14.09.2012
(51) Int. Cl.: H02P 9/00, H02P 6/18

(54) **System and method for sensor-less hysteresis current control of permanent magnet synchronous generators without rotor position information**

(30) Priority: 15.05.2012 US 201213472200
(71) Applicant: MagDrive, LLC, Arlington Heights, IL 60005 (US)
(72) Inventor: Gurkaynak, Yusuf, Flagstaff AZ 86001 (US); Stamenkovic, Igor, Flagstaff AZ 86004 (US); Milivojevic, Nikola, Flagstaff AZ 86001 (US); Schofield, Nigel, Wythanshawe Lancashire M23 2SG (GB); Baroud, Anthony J., Prospect Heights IL 60640 (US)
(74) Representative: Wagner, Karl H.

(57) **Abstract**

A system and method are provided for controlling a permanent magnet synchronous generator without rotor position information, utilizing sensor-less hysteresis control and brushless direct current switching scheme. The present invention controls the current and torque of the permanent magnet generator without information of the rotor position in respect to the stator.

## Description

### FIELD OF THE INVENTION

The present invention generally relates to a system and method for providing sensor-less hysteresis current control of permanent magnet synchronous generators without information of rotor position. In operation, a zero-crossing algorithm in conjunction with a switching pattern is utilized to control a permanent magnet generator.

### BACKGROUND OF THE INVENTION

There is a wide spread use of brushless direct current three-phase motors in applications wherein reliability and high efficiency are required. Critical to the operation and use of brushless motors is driving and controlling the motors to effectively reduce variations from one revolution to the next thus making the output of the PM machines more stable, efficient and precise.

Permanent magnet brushless electrical machines, have a permanent magnet rotor and a stator comprising a plurality of phase winding that may be independent or coupled in a variety of configurations. Typically, brushless electrical machines are three-phase motors and incorporate a driving circuit comprising integrated circuits to power the phase windings and in some instances may include an inverter bridge architecture or a full-bridge architecture. It should be understood that the discussions herein are equally applicable to electrical machines with varied winding and/or different connection schemes.

Ordinarily, in the actuation of permanent magnet electrical machines, it is necessary to detect the position of the machine's rotor in respect to the stator. This is achieved by sensors that are physically (in the case of an optical encoder) or electromagnetically (in the case of Hall Effect or electromagnetical resolver sensors), coupled to the rotor. Alternatively, the position may be detected by observing the voltages induced (phase back electromagnetic force EMF) to the coils of the machine. The detection of the rotor position enables a control system to select the phases of the motor that would be actuated at a given moment in time to thereby produce torque.

Torque control may be implemented by controlling the voltage applied to the machine or by current hysteresis. Current hysteresis control involves the application of a median current to phases of the machine that are selected by a controller to be actuated. The current is essentially controlled by a comparator with hysteresis which turns off a selected power switch when the current reaches a maximum value and turns on said selected power switch when the current reaches a minimum value. This operation generates a voltage modulation signal, with a variable switching frequency, maintains the current at an approximate reference value (therefore the torque) which may be adjusted to maintain a constant motor speed. This type of control has a drawback in that it is complex to implement with microcontroller systems as it requires rotor position information, an analog-to-digital converter and a powerful microcontroller that needs to have as high a switching frequency as possible in order to achieve low-ripple current waveform.

Voltage control involves the application of a voltage value to the permanent magnet machine phases that are selected by a controller to be actuated. The voltage is modulated by a pulse width modulated (PWM) signal/switching frequency that is generated by a timer. The control unit selects and turns on and off switches during the period in which the machines phases are fed with voltage from a power source. By varying the period between the closed switch period and the switching period, the mean voltage value on the machine's phases may be varied. Traditionally such control systems have a PWM with a fixed switching frequency and a switch conduction period (also known as duty cycle) that is adjusted based on the controllable value: speed, torque, etc. This aspect of the control, limits its application to situations where loads do not vary widely, as the reaction time of the control is quite slow, albeit simple and thus suitable for microcontroller based systems. Further, this control also requires rotor position information in order to be implemented.

In summary, currently available systems utilize information of the rotor position with respect to the stator. The problem with all of the existing systems is that the permanent magnet generator is not optimally controlled, because phase current and back EMF are not aligned, due to lack of current control and the rotor position feedback techniques result in excessive reactive power use thereby reducing the capacity of the generator and making the generator prone to over-heating.

What is needed is a robust and efficient solution that can be universally implemented without the drawbacks described above. A solution that provides a sensor-less control with a switching technique that has a variable frequency and does not require a prediction of the switching would enable better generator control. While other sensor-less control strategies exist that do not look at the OFF time of the switches, such systems rely on filtering of phase voltage signals which introduces phase lag of the rotor position. Exclusion of hardware filtering and provision of software correction of rotor position based on zero-crossing signal would avoid the short comings of current systems and would be advantageous, especially because it uses simple six-step switching pattern, but not complex field oriented control principles that require three phase into two phase transformation (abc into dq system).

The present invention fulfills these as well as other needs.

### SUMMARY OF THE INVENTION

In order to overcome the above stated problems, the present invention provides, in one aspect, a method programmed in a computing environment for current control of a permanent magnet generator utilizing brushless direct current switching without position sensing of the rotor position relative to the stator of the generator.

According to another aspect of the present invention, a microcontroller having one or more input/output ports is adapted to define feedback signal readings including current and phase voltage zero-crossing events for input to the input/output ports, and to define output signals including gate control signals to operate power switches that control the output voltage of the generator.

In a further aspect of the present invention, a synchronization sequence is provided to detect a zero-crossing event from any one phase voltage signal of the generator output. The present invention calculates a time period between the active and inactive status of said phase voltage signal, determines switch patterns and controls the generator outputs by utilizing current hysteresis control wherein switch settings are applied to control phase current and torque of the generator, and wherein said switch settings are non-predictable i.e. they depend on the generator's load, and occur at varied frequency.

Additional benefits of the above described system and method for providing sensor-less hysteresis current control of permanent magnet synchronous generators without direct information (position sensor) of rotor position are set forth in the following discussion.

### BRIEF DESCRIPTION OF THE DRAWINGS

The above-mentioned and other features and advantages of this invention, and the manner of attaining them, will become apparent and be better understood by reference to the following description of the invention in conjunction with the accompanying drawings, wherein:

FIG. 1 generally illustrates a hardware configuration for implementing the control concept of the present invention;

FIG. 2 is a timing diagram generally illustrating phase voltage, zero-crossings and switch signals during hysteresis control according to the present invention;

FIG. 3A is a flow chart of an exemplary algorithm for implementing the sensor-less hysteresis current control;

FIG. 3B is a time line of the operational sequences of the sensorless operation set forth in Fig. 3A; and

FIG. 4 is a representative switch pattern for the brushless direct current control of the present invention.

### DETAILED DESCRIPTION OF A PREFERRED EMBODIMENT

Generally, the systems, components and methods described herein for providing sensor-less hysteresis current control of PM generators according to the present invention may be implemented in a variety of hardware, software or combinations thereof.

The present invention applies the six-step BLDC switching scheme and controls the current and torque of the PM generator without obtaining continuous information/ feedback signals of the rotor position relative to the stator of the generator. The sensor-less hysteresis current control concept of the present invention features two components namely, a zero-crossing algorithm and a switching pattern.

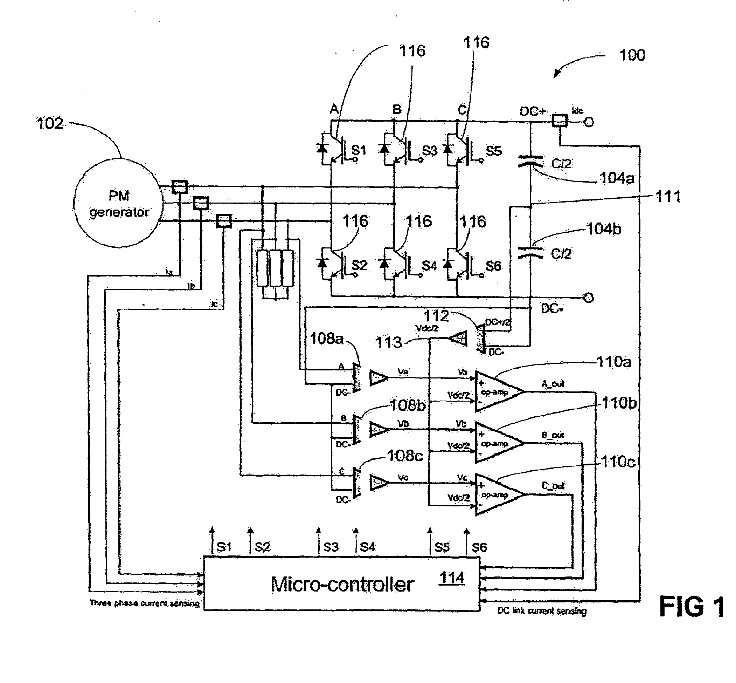

An exemplary hardware configuration for implementing the control concept of the present invention is illustrated in Fig. 1. The system 100 comprises a permanent magnet generator 102, which is a three phase (A, B, C) machine having a rotor with permanent magnets. The phases A, B, C of the generator 102 are connected to power switches S1, S2, S3, S4, S5 and S6 collectively referenced as switches 116, which rectifies 3 phase alternate-current (AC) variable voltage/frequency of the generator into direct-current (DC) voltage, which is maintained using capacitors 104a and 104b. A DC voltage Vdc is obtained across terminals DC+ and DC- of the system 100. The phases A, B, C of the generator 102 are connected in parallel to voltage sensors 108a, 108b and 108c, therefore sensing the phase voltage in respect to the DC- reference. The outputs Va, Vb and Vc, of the voltage sensors 108a, 108b and 108c respectively, are each connected to the positive terminal of individual operational amplifiers (op-amp) 110a, 110b, and 110c.

The DC link capacitors 104a, 104b are connected in series across terminals DC+ and DC-. A connection 111 between the capacitors 104a and 104b provides half of the direct output voltage V_{dc}/2 from the DC link, i.e. DC+ /2, to a voltage sensor 112. The second leg of the voltage sensor 112 is connected to DC-, to thereby enable voltage sensor 112 to detect one half of the output DC voltage i.e. V_{dc}/2. The output 113 of the voltage sensor 112 (V_{dc}/2) is operatively connected to the negative terminal of each of the op amps 110a, 110b and 110c, to derive zero-crossing signals A_out, B_out and C_out.

Output currents la, lb and lc from each of the phases A, B, C of the permanent magnet generator 102 along with the zero-crossing signals A_out, B_out and C_out are provided to a microcontroller 114 as inputs. The microcontroller 114, utilizing these input signals, provides output signals to activate or deactivate each of the switches S1, S2, S3, S4, S5 and S6.

In operation, the microcontroller 114 takes feedback signals from the permanent magnet generator 102 and the voltage sensors 108 / op-amp 110 circuits. As illustrated, the three op-amp circuits 110 are used to compare phase voltage signals Va, Vb and Vc of the PM generator 102 against half of the DC link voltage Vdc/2, to thereby determine a zero-crossing event for any of the phases A, B, or C.

A zero-crossing algorithm determines the zero-crossing sequence of the inactive phase voltage of the permanent magnet generator 102. The inactive phase voltage represents the generator's output of a particular phase which is not conducting any current at the particular moment in time, while the other two phases are active (i.e. conducting current). Triggered by the zero-crossing event of the inactive phase, the microcontroller 114 determines the point at which the inactive phase is activated. A delay which is defined herein as the sequence between the zero-crossing event and the activation of a phase enables the microcontroller 114 to set a switching pattern.

The switching pattern represents the sequence in which the power switches S1, S2, S3, S4, S5 and S6 are activated/deactivated during one electrical revolution (360 electrical degrees) of the PM generator.

Hysteresis current control can be achieved either by using 3-phase current sensors in each of the generator's phase, therefore sensing currents: la, lb and lc, or by using one current sensor in DC link and sensing only DC link current: Idc. The effect of hysteresis current control is the same, whichever of two mentioned options in utilized.

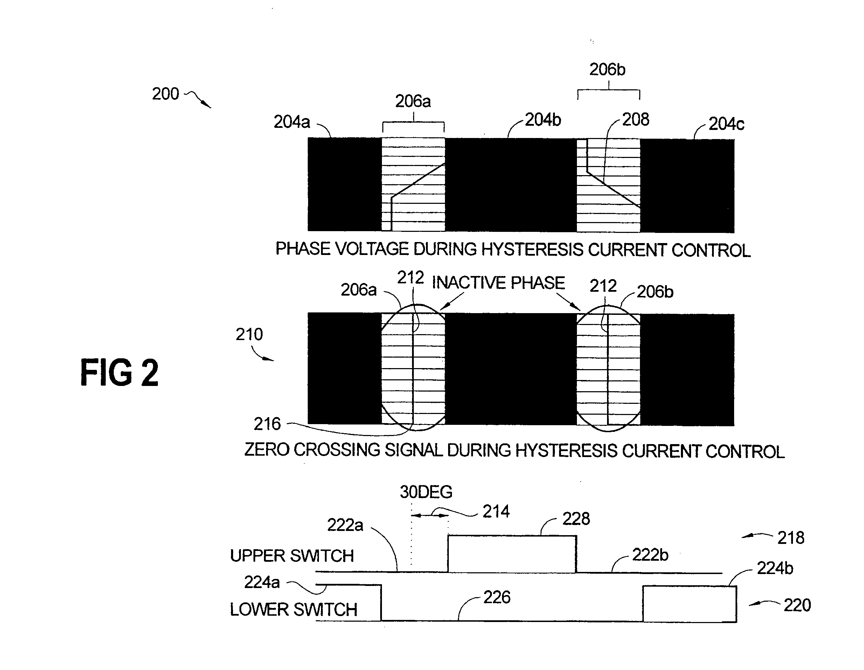

A representation of the phase voltage signal for a single phase of the permanent magnet generator 102 outputs Va, Vb or Vc, its zero-crossing and corresponding switch setting is illustrated in the timing diagrams 200 of Fig. 2. Diagram 218 illustrates the switching pattern of two switches over one phase during hysteresis current control. PWM blocks 204a, 204b, 204c represent the active state (high switching PWM variable frequency signal) of the phase voltage and the inactive state is represented by the spaces 206a, 206b between each block 204. The waveform 208 represents the phase voltage of the PM generator 102 during hysteresis current control. The pattern of the waveform 208 is the inactive period of the phase i.e. the moment when the phase is not conducting current. Diagram 210 illustrates the zero-crossing signal 212 during hysteresis current control. The zero-crossing signal 212 during the inactive phase 206 enables the controller to determine the point at which the inactive phase is in effect. The delay 214 is the sequence between the zero-crossing event 216 and activation of the phase 204. In the illustrated example of Fig. 2, the delay is 30 electrical degrees, but can be any other interval as well. Timing diagram 218 represents the status of the upper switch (i.e. S1, S3 or S5) for that phase. Timing diagram 220 represents the status of the lower switch (i.e. S2, S4, S6) for the phase. The combined states of the upper and lower switches correspond to the active and inactive states of the phase A, B, or C. Specifically and as shown, during one cycle, the OFF state 222a of the upper switch and the ON state 224a of the lower switch correspond with an active state 204a. Upper and lower switches of the same 'phase lag', meaning switching pairs S1 and S2, or S3 and S4, or S5 and S6 behave in this manner. The phase is active only when one switch within any pair is active. There is no scenario where both switches in a pair are active. A transition of the lower switch to an OFF state 226 initiates an inactive phase 206a and during the same cycle, while the lower switch is in the OFF state 226, the transition of the upper switch to the ON state 228 initiates an active phase 204b. In this cycle the ON state 228 of the upper switch corresponds with the active phase 204b. In other words, in the present cycle, when the upper switch goes to an OFF state, an inactive phase 206b is initiated. In the next cycle the process is reversed and the ON state 224b of the lower switch when the upper switch is in the OFF state 222b corresponds with the active phase 204c.

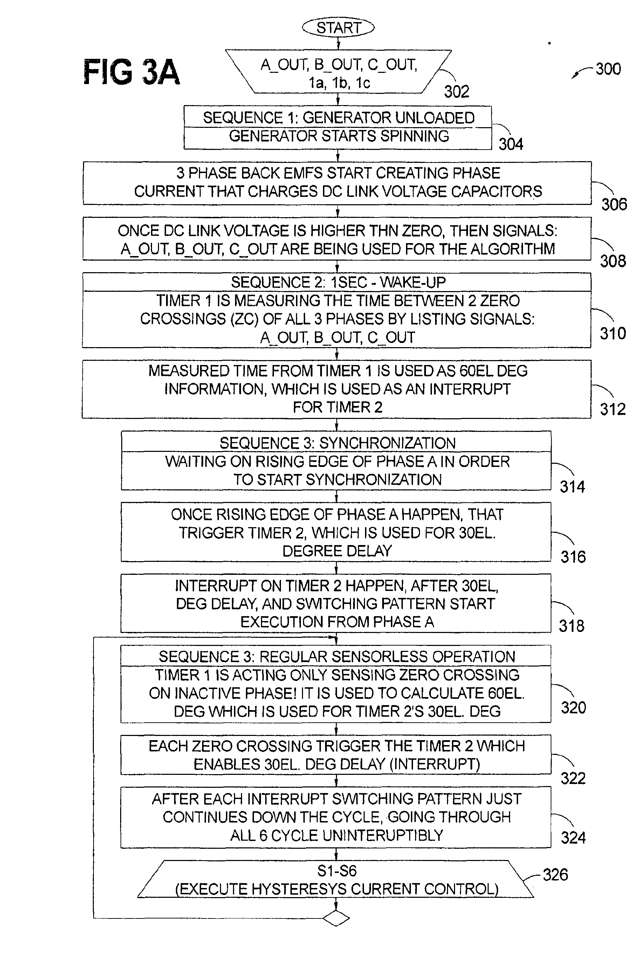

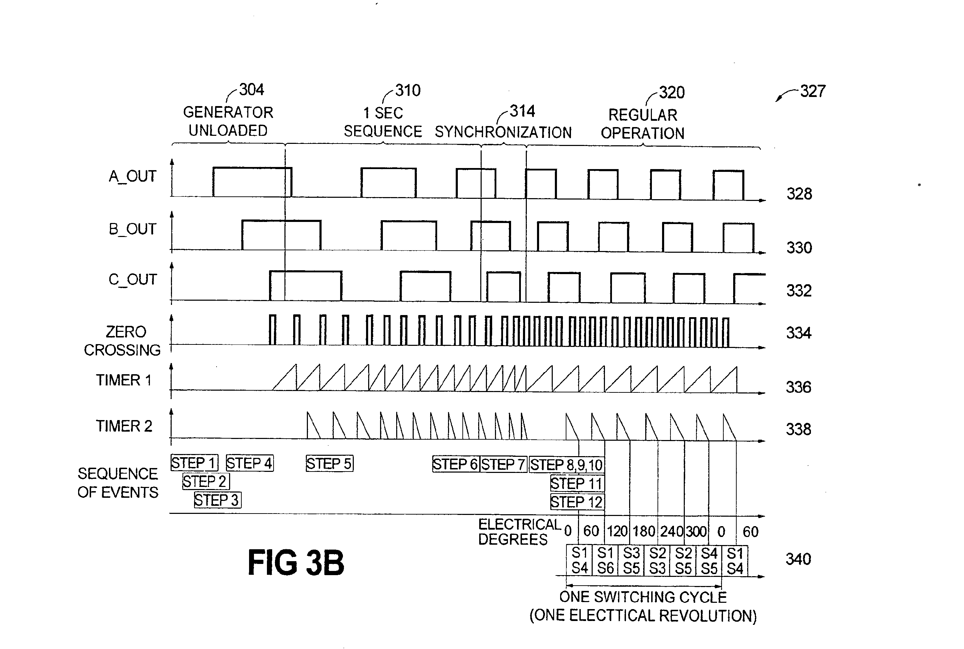

As previously described, the present invention utilizes a combination of hardware and software to implement the zero-crossing algorithm and switching pattern. The software aspect of the invention is best described with reference to the flow diagram 300 of Fig. 3A in conjunction with timing diagrams 327 of Fig. 3B, which illustrate the operational sequences of the invention. In an embodiment, the firmware of the microcontroller 114 for controlling the power switches S1,S2,S3,S4,S5,S6, implements the logic of the flow diagram 300.

For purpose of illustration only and not limitation, the present invention may be described as having four distinct sequences, namely generator unloaded, wake-up, synchronization, and regular sensor-less operation. The first three sequences may be considered the preparatory sequences for the regular sensor-less operation sequence. Before things get initiated, at step 302, signals A_out 328, B_out 330, C_out 332 and current signals la, lb, lc from the permanent magnet generator 102 are connected to the microcontroller 114 to provide the required input signals.

Turning initially to the first sequence of operations - unloading sequence, the generator 102 is initially in an unloaded state until the generator starts spinning, as shown at step 304. Also within the unloading sequence, at step 306 the 3 phase back EMFs begin to create phase currents la, lb, and lc that charge up the DC link voltage capacitors 104a, 104b. At step 308, once the DC link voltage across the capacitors goes above zero, signals A_out 328, B_out 330, C_out 332 are collected and utilized by the algorithm of the present invention. To explain further, an initialization sequence is performed when the generator first starts spinning. During this sequence, the system initializes the input /output ports of the microcontroller 114 and defines various feedback signal readings such as current and zero-crossing events, as well as output signals such as the signals for controlling the gate switches S1, S2, S3, S4, S5 and S6.

In the next sequence (i.e., wake-up sequence), which begins at step 310, a first timer 336 (Timer1) measures the time between two zero-crossings of all three phases, utilizing the signals A_out 328, B_out 330, and C_out 332. The measured time from Timer1 336 is utilized to provide a 60 electrical degree interrupt signal for a second timer 338 (Timer2), at step 312. This process may be described as providing a settling time delay of approximately one second following the initialization sequence.

The synchronization sequence follows next and begins with an initial wait at step 314 for the rising edge of a first phase (Phase A). Upon the occurrence of the rising edge of phase A, Timer2 338 is triggered at step 316. Timer2 338 is utilized for a thirty electrical degree delay. Following the delay, an interrupt driven by timer2 338 initiates the execution of the previously described switching pattern, beginning with phase A. In effect, the synchronization sequence performs as follows: During the passive rectification mode of the permanent magnet generator 102, the control system 100 checks the zero-crossing events originating from each of the phase outputs A_out 328, B_out 330, C_out 332 of the PM generator 102. On the occurrence of a zero-crossing event for a particular phase e.g. phase A, the microcontroller 114 calculates and determines the time period until that particular inactive phase (phase A) becomes active again. At this point, the microcontroller 114 sets an appropriate switch pattern. The ongoing process of switching patterns represents the regular sensor-less operation and hysteresis current control of the present invention.

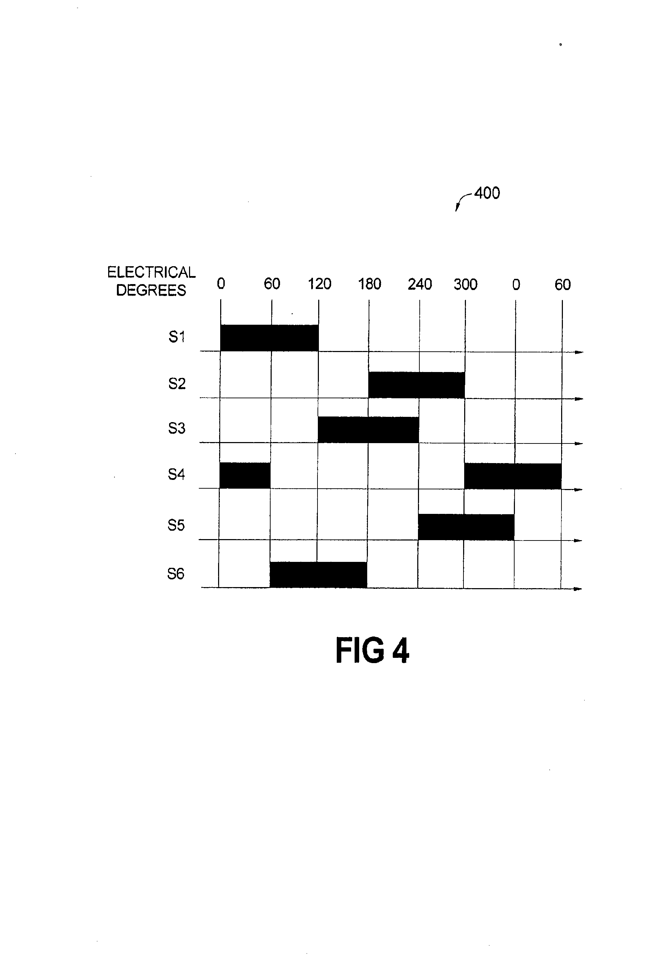

The regular sensor-less operation sequence begins at step 320 with timer1 336 sensing zero-crossings on the inactive phase. Timer 336 serves to calculate sixty (60) electrical degrees and trigger timer2 338, which enables a thirty (30) electrical degree delay, at step 322. Following each interrupt, the switching pattern is continued at step 324. Switches S1-S6 are set to execute hysteresis current control at step 326. One switching cycle 340 i.e. one electrical revolution, involves various patterns of switch settings 400 as shown in Fig. 4. It should be noted that the sensor-less algorithm continues indefinitely in this sequence until the generator is stopped.

As shown in Fig. 4 in the six-step brushless direct current control, switches S1 and S4 are turned on in the first 60 electrical degree step. Switches S1 and S6 are turned on in the second step 60 - 120 electrical degrees; S3 and S6 in the third step 120 - 180 electrical degrees; S2 and S3 in the fourth step 180 - 240 electrical degrees; S2 and S5 in the fifth step 240 - 300 electrical degrees; and S4 and S5 in the sixth step 300 - 360 electrical degrees.

In one embodiment of the present invention, during regular operation, following the synchronization of the system 100, the system determines the correct switching pattern for the switches S1, S2, S3, S4, S5, S6 and also chooses the inactive phase in which to observe the next zero-crossing. Following a zero-crossing in the inactive phase, the system sets a 30 electrical degrees delay and sets the next switch pattern. As part of the regular operation, hysteresis current control represents the switching pattern showing which switches are suitable for the rotational position of the rotor. Importantly, the system of the present invention only uses the appropriate switches S1, S2, S3, S4, S5, and S6 for current control for the rotor position. Once the rising edge of the phase A output signal occurs, the algorithm of the present invention starts to drive the six power switches utilizing a predetermined switching pattern and controlled by the first and second timers 336,338. This results in unpredictable and variable switching sequences.

The algorithm of the present invention uses a hysteresis current control scheme to determine and turn on or off, the chosen switches S1, S2, S3, S4, S5, and S6. The control scheme of the invention defines a band around the reference current, in one embodiment of the present invention the band is approximately 5%, but can be set in the code to any other value. If the actual current drops below the level of the band, the system turns ON appropriate switches to build up the current. When the current surpasses the upper level of the band, switches are turned off and kept off until the current drops within the specified band.

It should be noted that other brushless direct current sensor-less techniques such as PWM control utilize variable PWM duty cycle and a constant switching frequency, these techniques switch power devices in order to control the generator. Although the PWM technique may also utilize zero-crossing, PWM utilizes inactive back EMF signal from all three phases of the generator in order to get rotor position information. Further, during PWM switching, zero-crossing information is predictable because the switching frequency value is constant (typically about 10 KHz) at all times. This technique does not optimally control the generator and results in excessive reactive power usage thereby lowering the capacity of the generator and causing over-heating. The present invention utilizes a unique switching technique. The use of hysteresis current control where the switching frequency is varied and is non-predictable provides better control of the generator. With hysteresis current control, ON and OFF time for the switches S1, S2, S3, S4, S5, S6 depends on the actual current value, which cannot be known or predicted. The algorithm of the present invention does not rely on the OFF time of the switches but rather looks at the inactive phase of the brushless direct current control through a switching pattern.

Other sensor-less control strategies ignore off time of the switches and instead rely upon filtering the phase voltage signal. These methods by default introduce a phase lag on the rotor position. Conversely, the control strategy of the present invention does not utilize any hardware filtering and it implements software based correction of rotor position based on zero-crossing signals. As a result, the accuracy and effectiveness of the resent invention is not impacted by lower or higher speeds or speed range of the generator rotor.

From the foregoing, it will be seen that this invention is one well adapted to attain all the ends and objects hereinabove set forth together with other advantages which are obvious and which are inherent to the method and apparatus. It will be understood that certain features and sub combinations are of utility and may be employed without reference to other features and sub combinations. This is contemplated by and is within the scope of the claims. Since many possible embodiments of the invention may be made without departing from the scope thereof, it is also to be understood that all matters herein set forth or shown in the accompanying drawings are to be interpreted as illustrative and not limiting.

The constructions described above and illustrated in the drawings are presented by way of example only and are not intended to limit the concepts and principles of the present invention. As used herein, the terms "having" and/or "including" and other terms of inclusion are terms indicative of inclusion rather than requirement.

While the invention has been described with reference to preferred embodiments, it will be understood by those skilled in the art that various changes may be made and equivalents may be substituted for elements or components thereof to adapt to particular situations without departing from the scope of the invention. Therefore, it is intended that the invention not be limited to the particular embodiments disclosed as the best mode contemplated for carrying out this invention, but that the invention will include all embodiments falling within the scope and spirit of the appended claims.

## Claims

1. A method programmed for execution in a microcontroller device, for current control of a permanent magnet generator utilizing brushless direct current switching without sensing physical rotor position relative to the stator of the generator, the method comprising:
utilizing a zero-crossing algorithm to detect a voltage zero-crossing event, said zero-crossing algorithm detecting an inactive phase of the generator;
providing software correction to emulate rotor position based on said voltage zero-crossing event; and
utilizing a switching pattern with a non-constant switching frequency, to provide current hysteresis control of the generator, wherein said switching pattern is non-predictable and variable.

2. The method of claim 1 further comprising:
providing feedback signals to the microcontroller device, said feedback signals including current and phase voltage zero-crossing event signals; and
providing output signals from the microcontroller device to operate a plurality of switches and to provide said switching pattern and thereby control phase current of the generator, said output signals including gate control signals to said plurality of switches.

3. The method of claim 1 further comprising:
providing a synchronization sequence to detect said voltage zero-crossing event from a phase voltage signal of an output of the permanent magnet generator output; and
calculating a time period or delay between an active and an inactive state of said phase voltage signal.

4. The method of claim 1 wherein said current hysteresis control applies one or more switch settings, to control a phase current signal of the permanent magnet generator and wherein said one or more switch settings are programmatically variable.

5. The method of claim 4 wherein said one or more switch settings vary according to the permanent magnet generator's load.

6. The method of claim 5, wherein said one or more switch settings are implemented at varying frequencies.

7. A method programmed in a computing environment for current control of a permanent magnet generator utilizing brushless direct current switching without information on physical rotor position relative to the stator of the generator, the method comprising:
providing a microcontroller having one or more input/output ports;
providing an initialization sequence to define one or more feedback signals as inputs to said microcontroller ports and one or more output signals from said microcontroller ports to control a plurality of switches;
specifying a system settling period;
utilizing a synchronization sequence to detect a zero-crossing event from a phase voltage signal of the generator output;
calculating a time period between an active status and an inactive status of said phase voltage signal; and
providing one or more switch settings for said plurality of switches, according to said time period to control a generator output current, wherein said provided one or more switch settings are non-predictable and occur at variable frequencies.

8. The method of claim 7, wherein said one or more feedback signals of said initialization sequence include current and zero-crossing events; and
wherein said one or more output signals include gate control signals for said microcontroller, wherein said gate control signals operate at least one of said plurality of switches that control the output voltage of the generator.

9. The method of claim 7 further comprising:
utilizing an operating sequence, wherein said operating sequence follows said synchronization sequence and said operating sequence consults a table to determine a first switch pattern;
implementing a delay for said system settling period to allow a second switch pattern to be set; and
controlling the generator outputs, utilizing current hysteresis control, wherein said first and second switch pattern settings are applied to control current and torque outputs of the generator.
